# FASCICULE DE BREVET EUROPEEN

(11) **EP 2 907 724 B1**
(45) Date de publication et mention de la délivrance du brevet: **24.05.2017**
(21) Numéro de dépôt: 15155001.9
(22) Date de dépôt: 13.02.2015
(51) Int. Cl.: B62B 7/08

(54) **Hamac pour poussette pliable, et poussette correspondante**
Aufsatz für zusammenklappbaren Kinderwagen, und entsprechender Kinderwagen
Hammock for a collapsible stroller, and corresponding stroller

(30) Priorité: 13.02.2014 FR 1451141
(43) Date de publication de la demande: 19.08.2015
(73) Titulaire: Dorel France, 49309 Cholet Cedex (FR)
(72) Inventeur: Ancel, Nicolas, 44310 Saint Philert de Grand Lieu (FR)
(74) Mandataire: Vidon Brevets & Stratégie

(56) Documents cités:
- WO-A2-2005/080171
- DE-U1- 20 010 365
- US-A- 4 335 893
- US-A1- 2010 194 077
- US-A1- 2012 319 382

## Description

### 1. Domaine de l'invention

Le domaine de l'invention est celui de la puériculture, et plus précisément des voitures d'enfant, ou poussettes. Plus précisément encore, l'invention concerne les hamacs équipant des poussettes pliables en trois dimensions (3D), qui prévoient, lors du pliage de la poussette, un rapprochement des deux parties latérales de celles-ci pour réduire l'encombrement.

### 2. Art antérieur

On connaît de nombreuses techniques de pliage de poussettes, et en particulier plusieurs techniques permettant un pliage en trois dimensions, mettant par exemple en oeuvre des systèmes à base de croisillons reliant les parties latérales gauche et droite du châssis. Bien entendu, pour de tels pliages en trois dimensions, il faut également que le hamac équipant la poussette soit pliable en largeur (sauf à devoir le retirer auparavant, ce qui n'est généralement pas pratique). Ce hamac, qui peut selon les cas être solidaire du châssis, ou monté sur celui-ci de façon amovible, doit donc être équipé de moyens permettant son pliage.

Dans certains cas, le hamac est formé d'une simple toile, mise en forme lorsque le châssis est déplié. Cette approche n'est cependant pas adaptée à tous les types de poussettes, peut perturber le pliage (la toile n'étant pas guidée) et être relativement inconfortable, du fait d'une trop grande souplesse, notamment au niveau de l'extrémité avant de l'assise, qui a tendance à se plier sous le poids de l'enfant.

Pour faciliter le pliage du hamac on prévoit donc généralement des croisillons spécifiques, s'étendant sous l'assise et/ou à l'arrière du dossier.

En complément, on peut aussi prévoir des plaques de rigidification dans l'assise. Il peut notamment s'agir de deux plaques montées respectivement à gauche et à droite de l'assise, et venant se placer sensiblement l'une contre l'autre lors du pliage.

Cette approche améliore le hamac, mais n'est pas suffisante. En effet, du fait de la nature restant souple de l'assise, le pliage du hamac peut être perturbé par la présence des plaques, qui peuvent s'opposer au pliage, se déplacer de façon imprécise, voire empêcher le pliage et/ou se détériorer.

En outre, le confort de l'enfant reste imparfait, l'extrémité avant de l'assise ayant toujours tendance à se plier sous l'effet de son poids (phénomène pouvant être d'autant plus inconfortable qu'il est plus nettement défini par les deux plaques). Le document WO 2005/080171 A2 décrit un hamac pour poussette selon le préambule de la revendication 1.

### 3. Objectifs de l'invention

L'invention a notamment pour objectif de pallier au moins certains de ces inconvénients.

Plus précisément, l'invention a pour objectif de fournir un nouveau type de hamac pliable, et une poussette correspondante, permettant un pliage et un dépliage plus efficace et plus ergonomique.

Un autre objectif de l'invention, selon au moins un mode de réalisation particulier, est de fournir un tel hamac, améliorant le confort de l'enfant transporté.

### 4. Exposé de l'invention

Ces objectifs, ainsi que d'autres qui apparaîtront par la suite, sont atteints à l'aide d'un hamac pour poussette pliable en trois dimensions, comprenant un dossier et une assise montés sur une structure pliable.
Selon l'invention, ladite assise comprend deux plaques de renfort articulées entre elles, d'une part, et respectivement à un élément latéral de ladite structure pliable, d'autre part, à l'aide d'articulations correspondantes, ladite structure pliable comprenant des croisillons reliant lesdits éléments latéraux, montés de façon que lesdits éléments latéraux se rapprochent l'un de l'autre, lors du pliage, lesdits croisillons s'étendant sous ladite assise.

Selon un mode de réalisation particulier de l'invention, ledit dossier comprend deux plaques de renfort, articulées entre elles, d'une part, et respectivement à un élément latéral, de ladite structure pliable, d'autre part, à l'aide d'articulations correspondantes, ladite structure pliable comprenant des croisillons reliant lesdits éléments latéraux, montés de façon que lesdits éléments latéraux se rapprochent l'un de l'autre, lors du pliage, lesdits croisillons s'étendant à l'arrière dudit dossier.

Ainsi, le pliage et le dépliage du hamac sont efficacement guidés, sans risque de blocage ou de détérioration, et l'enfant peut être efficacement et confortablement assis et maintenu.

Dans ce cas, lesdits croisillons peuvent notamment définir deux compas, montés de façon que la première branche du premier compas est placée au-dessus de la première branche du second compas, et que la seconde branche du premier compas est placée au-dessous de la seconde branche du second compas.

En se croisant ainsi, les compas se supportent l'un l'autre, de façon simple.

Ledit premier compas peut, dans un mode de réalisation, présenter deux branches de compas reliées par un axe s'étendant au voisinage d'une partie avant, opposée à la partie arrière reliée au dossier, de ladite assise.

Ainsi, ce compas introduit un renfort supplémentaire, au voisinage de la partie avant de l'assise, limitant le risque que celle-ci s'affaisse ou s'incurve sous le poids de l'enfant.

Selon un mode de réalisation particulier, le hamac comprend des moyens de contrôle du pliage desdites plaques, n'autorisant qu'un seul sens de rotation pour au moins l'une desdites articulations, lors du pliage.

Il peut notamment s'agir d'au moins une butée d'articulation, limitant les déplacements de l'une au moins desdites articulations.

Selon un mode de réalisation particulier, le hamac comprend des moyens d'aide à l'amorçage du pliage desdites plaques de renfort.

Ainsi, le hamac peut comprendre au moins un élément élastique monté sous lesdites plaques de renfort, de façon qu'il soit tendu lorsque ledit hamac est dans une position dépliée, lesdites plaques de renfort s'étendant dans le plan de l'assise, respectivement du dossier.

Selon une autre approche, au moins une desdites plaques de renfort porte un plan incliné, coopérant avec un desdits croisillons lors du pliage.

L'invention concerne également les poussettes pliables en trois dimensions comprenant au moins un hamac tel que décrit ci-dessus.

### 5. Exposé des figures

D'autres caractéristiques et avantages de l'invention apparaîtront à la lecture de la description suivante d'un mode de réalisation préférentielle, données à titre de simples exemples illustratifs et non limitatifs, et des dessins annexés parmi lesquels :
- les figures 1A et 1B illustrent schématiquement une poussette équipée d'un hamac selon l'invention, respectivement dans la position dépliée et dans la position pliée ;
- la figure 2 illustre schématiquement la structure d'un hamac selon l'invention, avec une assise et un dossier présentant des plaques articulées ;
- les figures 3A et 3B illustrent un exemple de réalisation d'une assise de hamac selon l'invention, respectivement positionnée pliée et en position en cours de pliage ;
- la figure 4 illustre le dessous de l'assise, et les compas équipant la structure du hamac;
- la figure 5 présente une vue partielle de l'articulation centrale de la structure d'assise des figures 3A et 3B ;
- la figure 6 présente un exemple d'articulation latérale du système des figures 3A et 3B ;
- la figure 7 présente un premier exemple d'une plaque d'assise ;
- la figure 8 présente un second exemple d'une plaque d'assise, vue de dessous, selon une variante de réalisation ;
- la figure 9 illustre l'ensemble de deux plaques selon la figure 8, assemblées entre elles ;
- la figure 10 est une vue agrandie d'un des éléments de charnière de la figure 9.

### 6. Description d'un mode de réalisation particulier

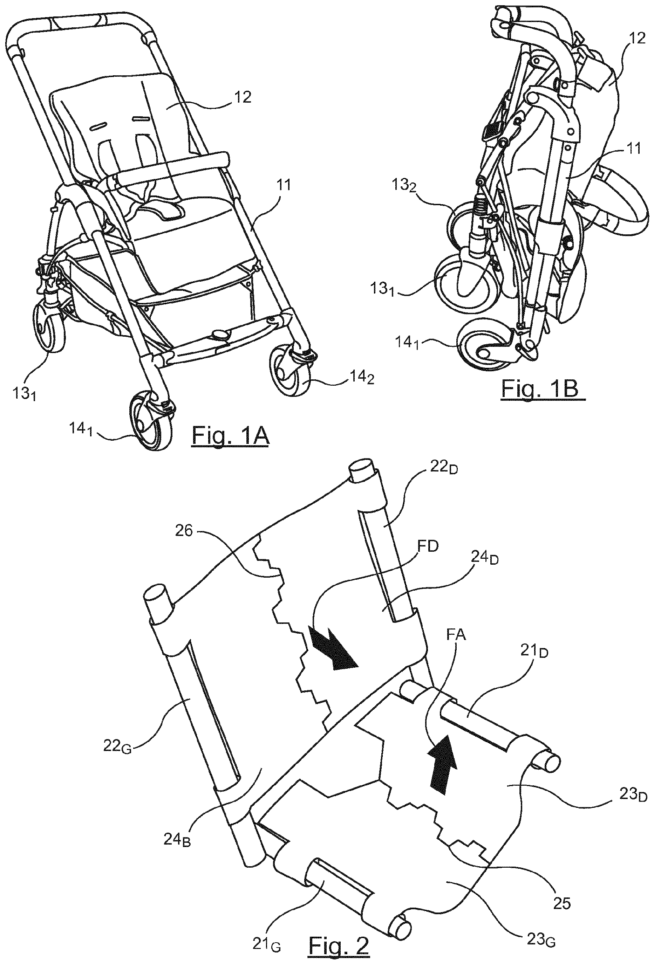

L'invention s'applique donc aux poussettes pliables en trois dimensions, et en particulier à leurs hamacs. Les figures 1A et 1B illustrent schématiquement un exemple d'une telle poussette.

Sur la figure 1A, la poussette est dans sa position dépliée, le châssis 11 étant déployé, et ayant entraîné la mise en forme du hamac 12, qui est prêt à recevoir un enfant.

Le pliage en trois dimensions, quelle que soit la cinématique mise en oeuvre entraîne le rapprochement des bords latéraux du châssis 11, les deux roues arrière 13₁, 13₂ d'une part et les deux roues avant 14₁, 14₂ d'autre part étant respectivement placées l'une proche de l'autre, de façon que l'ensemble de la poussette présente un encombrement réduit.

Lors du pliage, comme le montre la figure 1B, le hamac 12 s'est également plié. Comme indiqué précédemment, bien que ce hamac 12 soit pliable, il est important qu'il reste confortable dans la position dépliée (figure 1A), et que les opérations de pliage et de dépliage se fassent de façon simple et efficace malgré la souplesse du hamac.

Selon l'invention, on a donc prévu d'équiper l'assise 121, et le cas échéant le dossier 122, de plaques articulées, telles qu'illustrées, schématiquement sur la figure 2. Ces plaques, également appelées "sous-pads", sont destinées à renforcer l'assise, et le cas échéant le dossier. Elles sont bien sur recouvertes d'un tissu d'habillage, et le cas échéant d'une garniture complémentaire de confort.

Des croisillons, non visibles, placés sous l'assise et à l'arrière du dossier, assurent le contrôle du pliage et du dépliage, en rapprochant ou en éloignant respectivement les éléments latéraux 21_{G} et 21_{D} de la structure de l'assise du hamac, et les éléments latéraux 22_{G} et 22_{D} du dossier. Ces éléments latéraux peuvent notamment être, selon les modes de réalisation des tiges, des barres ou des tubes, généralement métalliques.

Les deux plaques de support 23_{G}, 23_{D} sont respectivement articulées sur les éléments de structure 21_{G} et 21_{D} ainsi qu'entre elles (25) au milieu de l'assise, ces articulations ayant ici des axes parallèles.

Il en est de même pour les plaques de support 24_{G}, et 24_{D} du dossier, qui sont d'une part articulées sur les éléments de structure 22_{G}, 22_{D}, et d'autre part articulées entre elles (26) au milieu du dossier.

Ainsi, lorsqu'une action de pliage est engagée, l'articulation centrale 25 de l'assise se déplace vers le haut (flèche FA), et l'articulation centrale du dossier 26 se déplace vers l'avant (flèche FD).

Cette structure avec les articulations centrales et latérales « rigides » 25, 26 (par opposition à la souplesse de la toile, lorsque des plaques sont introduites dans la garniture de l'assise du dossier sans de telles articulations) permet un guidage efficace et maitrisé du pliage et du dépliage.

En outre, la présence de ces plaques solidarisées l'une à l'autre par l'articulation centrale 25 améliore le confort de l'enfant, en particulier au niveau de la partie avant de l'assise.

Comme indiqué précédemment, il n'est pas impératif que l'assise et le dossier présentent de telles plaques articulées. Dans le mode de réalisation décrit plus en détails par la suite, seul l'assise présente de telles plaques. Dans une autre variante, il pourrait être possible que seul le dossier soit ainsi équipé.

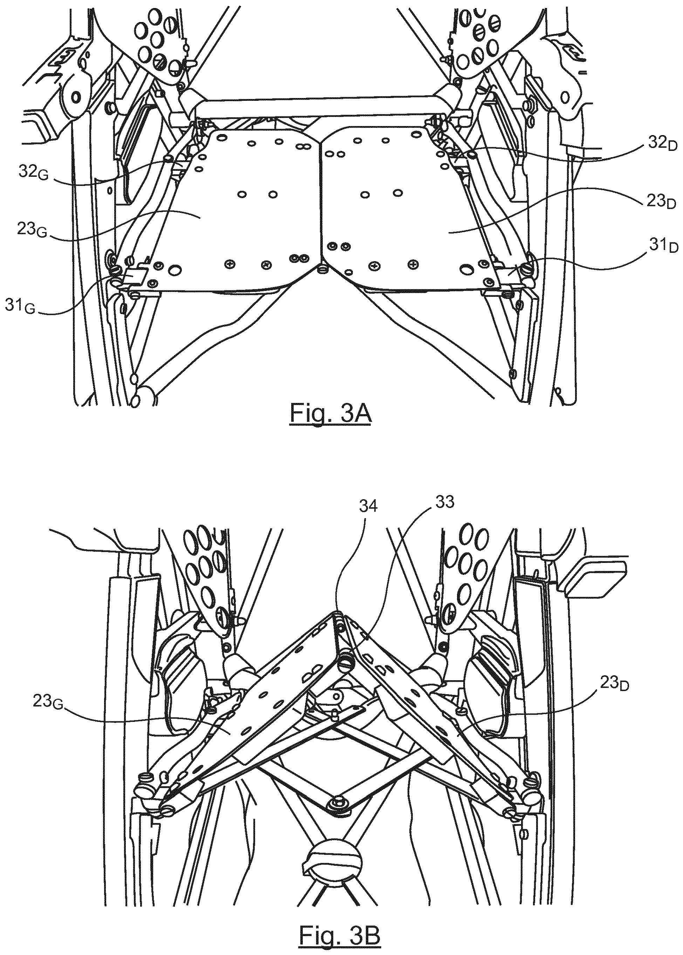

Les figures 3A et 3B présentent respectivement des plaques d'assise 23_{G} et 23_{D} dans la position dépliée, et dans une position en cours de pliage.

Comme on le voit sur la figure 3A, dans la position dépliée, les deux plaques de renfort 23_{G} et 23_{D} définissent une surface globale de renfort couvrant l'essentiel de la surface de l'assise (telle qu'elle sera définie par la garniture qui recouvrira les plaques).

Des articulations 31_{G}, 32_{G}, 31_{D}, 32_{D}, assurent la solidarisation des plaques au châssis.

Comme on le voit plus précisément sur la figure 3B, qui présente l'assise en cours de pliage, les deux plaques de renfort 23_{G}, 23_{D} sont articulées entre elles, via deux charnières 33, 34.

Lors du pliage, l'articulation centrale se déplace vers le haut, au fur et à mesure que les bords latéraux de la poussette, et donc du hamac, se rapprochent l'un de l'autre. Dans la position complètement pliée, les plaques de renfort 23_{G} et 23_{D} peuvent être sensiblement parallèle, ou à tout le moins formées un angle très faible.

Le rapprochement latéral des bords du hamac est contrôlé, en ce qui concerne l'assise (des moyens similaires peuvent être mis en oeuvre pour le dossier) par un ensemble de croisillons, qui assurent à la fois le renfort de l'ensemble, et un guidage efficace.

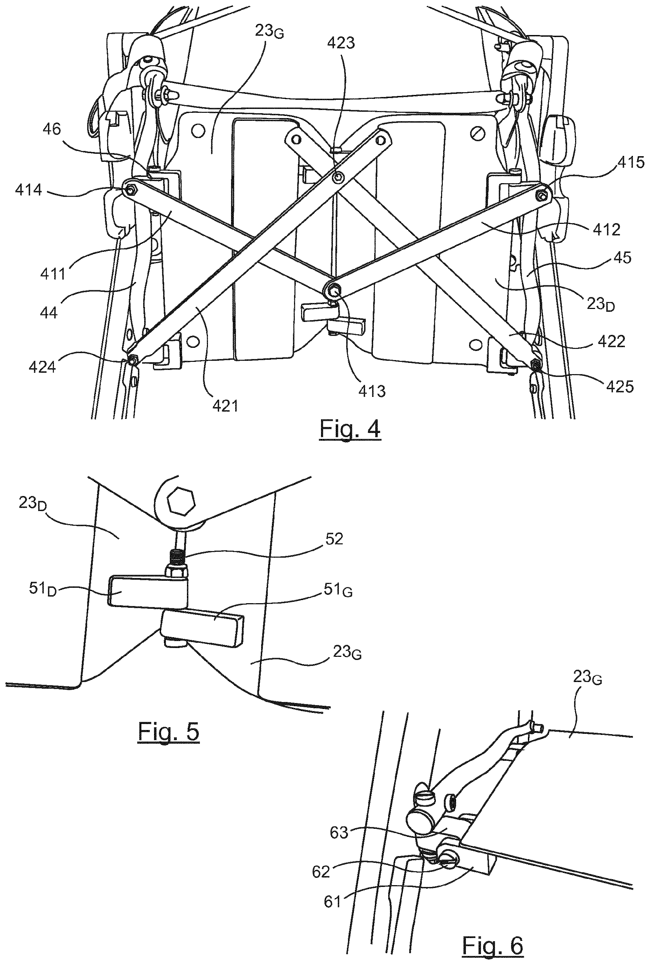

Selon le mode de réalisation particulier illustré, ce système de croisillons peut être formé par deux compas, montés comme illustré sur la figure 4, qui présente l'assise vue de dessous.

Un premier compas présente deux branches 411, 412, articulées entre elles par un pivot 413. La branche 411 est également reliée à l'élément de structure latérale 44 (dans ce mode de réalisation par l'intermédiaire d'une pièce de liaison 46 avec l'articulation de la plaque 23_{G}). Symétriquement, la branche 412 est solidarisée à l'élément de structure 45, par un pivot 415.

Un second compas présente deux branches 421, 422 articulées entre part un pivot 423. La branche 421 du second compas est reliée également à l'élément de structure 44, par le pivot 424, et la branche 422 à l'élément de structure 45, par le pivot 425.

On note que les deux pivots 413 et 423 s'étendent en position centrale de l'assise, au niveau (selon un plan vertical) de l'articulation 25 entre les deux plaques de support 23_{G} et 23_{D}.

Le pivot 413 est placé vers l'avant de la poussette, et renforce donc la partie avant de l'assise, qui a classiquement tendance à s'affaisser sous le poids de l'enfant.

Par ailleurs, pour obtenir une meilleure rigidité, on peut noter que, selon ce mode de réalisation, les compas se supportent l'un et l'autre, l'assemblage étant tel que la branche 411 du premier compas s'étend au-dessus de la branche 421 du second compas, alors que la branche 412 du premier compas s'étend en-dessous de la branche 422 du second compas.

La figure 5 illustre un exemple d'articulation centrale. Dans le mode de réalisation illustré, deux articulations de ce type sont prévues, respectivement à l'avant et à l'arrière de l'assise. Deux éléments de charnière 51_{D} et 51_{G} sont solidarisés respectivement aux plaques de support 23_{D}, 23_{G} et reliés entre eux par une tige 52, permettant l'articulation.

On note que les éléments de charnière 51_{G}, 51_{D} présentent une certaine épaisseur, et qu'en conséquence l'axe d'articulation 25, défini par la tige 52, s'étend sensiblement en-dessous du plan défini par les plaques de renfort 23_{G}, 23_{D} dans la position dépliée. Ceci facilite le pliage « vers le haut » (flèche FA).

La figure 6 présente un exemple d'articulation latérale. De la même façon, un élément de charnière 61 est monté sous la plaque 23_{G}, et relié par une tige 62 à un élément de charnière complémentaire 63 solidarisée à la structure du châssis.

A nouveau, on constate que l'axe d'articulation s'étend sous le plan défini par les plaques de renfort dans la position dépliée, et sensiblement dans le même plan horizontal que l'axe d'articulation central.

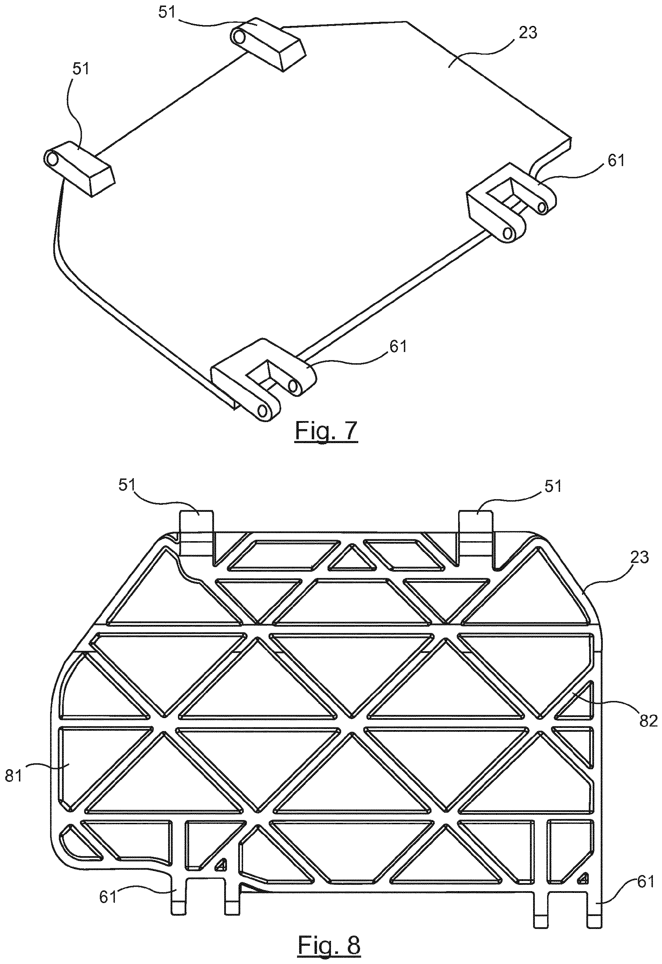

La figure 7 présente plus précisément une plaque de renfort, vu de dessous. Cette plaque de renfort 23 porte donc deux éléments de charnière 51, pour l'articulation centrale, et deux éléments de charnière latérale 61, pour l'articulation latérale.

Selon une variante, illustrée par la figure 8, la plaque de renfort 23 peut ne pas être pleine, de façon à être plus légère. Sur cette vue de dessous, la surface plane 81 présente une épaisseur réduite et est renforcée par une structure de renfort 82, formée d'un ensemble de nervures entrecroisées.

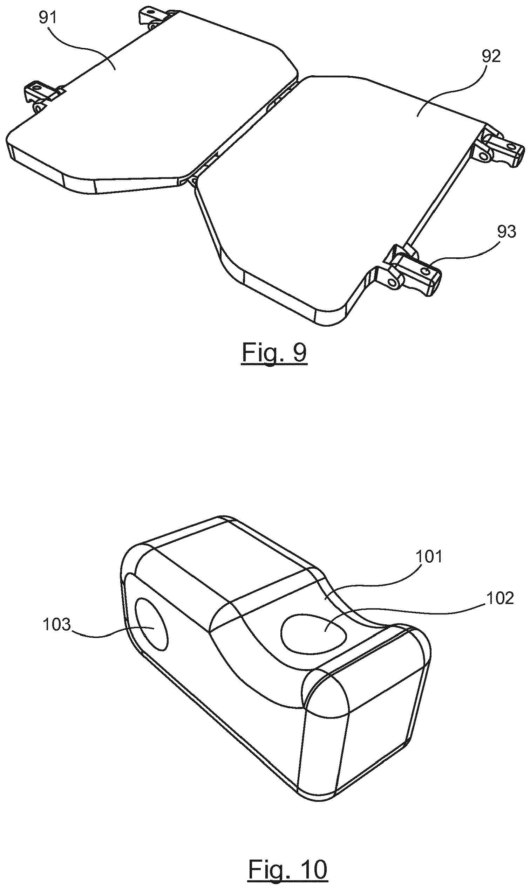

La figure 9 illustre deux plaques 91 et 92 de ce type, assemblées l'une à l'autre, dans la position dépliée, et munies de quatre éléments de charnière 93 permettant la solidarisation au châssis.

La figure 10 illustre l'un de ces éléments de charnière, qui présente une surface concave 101 apte à coopérer avec la surface arrondie complémentaire d'un tube du châssis, une première lumière 102 permettant la solidarisation à ce tube, par exemple via une vis, et une seconde lumière 103, perpendiculaire à la première, permettant la solidarisation avec la portion 61 de la plaque.

Le pliage devant s'effectuer « vers le haut », pour les plaques d'assise (ou « vers l'avant » pour les plaques de dossier), des moyens d'amorçage du pliage peuvent être prévus.

Selon une première approche, on peut placer un élément élastique monté sous lesdites plaques de renfort, par exemple sous la forme d'une bande élastique (non représentée) reliant les deux plaques et s'étendant sensiblement perpendiculairement à l'axe de l'articulation. Cette bande est montée de façon qu'elle soit tendue lorsque le hamac est dans une position dépliée et que les plaques de renfort s'étendent dans le plan de l'assise (respectivement du dossier). Lorsque l'utilisateur débute le pliage du châssis, les deux côtés se rapprochent légèrement l'un de l'autre, et les deux côtés du hamac tendent à faire de même. La bande élastique cherche à se détendre, et poussent donc les deux plaques vers le haut (et s'opposent à un déplacement vers le bas, qui tendrait encore plus la bande élastique).

Selon une autre approche, au moins une des plaques de renfort peut porter une excroissance, définissant un pan incliné (non représenté) destiné à venir en contact avec l'une des branches de l'un des compas. Lorsque la branche du compas commence à se déplacer pour assurer le début du pliage, elle entre en contact progressivement avec le pan incliné, ce qui entraîne un déplacement correspondant vers le haut. A nouveau, on obtient un amorçage du pliage, vers le haut (dans le cas de l'assise).

Par ailleurs, des butées peuvent être prévues, pour empêcher les plaques d'assise de se déplacer vers le bas, et/ou assurer un maintien stable des plaques dans la position dépliée. Ces butées peuvent notamment être prévues sur une ou plusieurs des charnières formant les articulations.

## Revendications

1. Hamac pour poussette pliable en trois dimensions, comprenant un dossier (122) et une assise (121) montés sur une structure pliable, **caractérisé en ce que** ladite assise (121) comprend deux plaques de renfort (23_{D}, 23_{G}), articulées entre elles, d'une part, et respectivement à un élément latéral (21_{D}, 21_{G}), de ladite structure pliable, d'autre part, à l'aide d'articulations (31_{D}, 31_{G}, 32_{D}, 32_{G}) correspondantes, ladite structure pliable comprenant des croisillons reliant lesdits éléments latéraux (21_{D}, 21_{G}), montés de façon que lesdits éléments latéraux (21_{D}, 21_{G}) se rapprochent l'un de l'autre, lors du pliage, lesdits croisillons s'étendant sous ladite assise (121),
lesdits croisillons définissant deux compas, présentant chacun deux branches reliées par un pivot (413, 423) s'étendant en position centrale de l'assise au niveau, selon un plan vertical, de l'articulation entre les deux plaques de renfort, et montés de façon que la première branche (411) du premier compas est placée au-dessus de la première branche (421) du second compas, et que la seconde branche (412) du premier compas est placée au-dessous de la seconde branche (422) du second compas.

2. Hamac selon la revendication 1, **caractérisé en ce que** ledit premier compas présente deux branches (411, 412) de compas reliées par un axe (413) s'étendant au voisinage d'une partie avant, opposée à la partie arrière reliée au dossier (122), de ladite assise (121).

3. Hamac selon la revendication 1, **caractérisé en ce qu'**il comprend des moyens de contrôle du pliage desdites plaques (23_{D}, 23_{G}, 24_{D}, 24_{G}), n'autorisant qu'un seul sens de rotation pour au moins l'une desdites articulations (31_{D}, 31_{G}, 32_{D}, 32_{G}), lors du pliage.

4. Hamac selon la revendication 3, **caractérisé en ce qu'**il comprend au moins une butée d'articulation, limitant les déplacements de l'une au moins desdites articulations (31_{D}, 31_{G}, 32_{D}, 32_{G}).

5. Hamac selon la revendication 1, **caractérisé en ce qu'**il comprend des moyens d'aide à l'amorçage du pliage desdites plaques de renfort (23_{D}, 23_{G}, 24_{D}, 24_{G}).

6. Hamac selon la revendication 5, **caractérisé en ce qu'**il comprend au moins un élément élastique monté sous lesdites plaques de renfort (23_{D}, 23_{G}, 24_{D}, 24_{G}), de façon qu'il soit tendu lorsque ledit hamac est dans une position dépliée, lesdites plaques de renfort (23_{D}, 23_{G}, 24_{D}, 24_{G}) s'étendant dans le plan de l'assise (121), respectivement du dossier (122).

7. Hamac selon la revendication 6, **caractérisé en ce qu'**au moins une desdites plaques de renfort (23_{D}, 23_{G}, 24_{D}, 24_{G}) porte un plan incliné, coopérant avec un desdits croisillons lors du pliage.

8. Poussette pliable en trois dimensions comprenant au moins un hamac (12) selon l'une quelconque des revendications 1 à 7

## Patentansprüche

1. Hängematte für einen nach drei Dimensionen faltbaren Kinderwagen, der eine Rücklehne (122) und eine Sitzfläche (121) aufweist, die auf einer faltbaren Struktur angebracht sind, **dadurch gekennzeichnet, dass** die besagte Sitzfläche (121) zwei Verstärkungsplatten (23_{D}, 23_{G}) aufweist, welche einerseits gelenkig miteinander und andererseits jeweils mit einem seitlichen Element (21_{D}, 21_{G}) der besagten faltbaren Struktur mit Hilfe entsprechender Gelenke (31_{D}, 31_{G}, 32_{D}, 32_{G}) verbunden sind, wobei die besagte faltbare Struktur Kreuzstreben aufweist, welche die besagten seitlichen Elemente (21_{D}, 21_{G}) verbinden, wobei diese Kreuzstreben so angebracht sind, dass die besagten seitlichen Elemente (21_{D}, 21_{G}) beim Falten aneinander gebracht werden und wobei sich die besagten Kreuzstreben sich unter der besagten Sitzfläche (121) erstrecken,
wobei die besagten Kreuzstreben zwei Winkelverbindungen bilden, die jeweils zwei Arme aufweisen, die jeweils über einen Drehzapfen (413, 423) verbunden sind, die sich in zentraler Stellung von der Sitzfläche in einer vertikalen Ebene auf Höhe des Gelenkes zwischen den zwei Verstärkungsplatten erstrecken und so angebracht sind, dass der erste Arm (411) der ersten zweiarmigen Winkelverbindung oberhalb des ersten Armes (421) der zweiten zweiarmigen Winkelverbindung liegt, während der zweite Arm (412) der ersten zweiarmigen Winkelverbindung sich unterhalb des zweiten Armes (422) der zweiten zweiarmigen Winkelverbindung befindet.

2. Hängematte nach Anspruch 1, **dadurch gekennzeichnet, dass** das erste zweiarmige Gelenk zwei Arme (411, 412) aufweist, die mittels einer Achse (413) miteinander verbunden sind, welche sich in der Nähe eines vorderen Teils erstreckt, der gegenüber dem hinteren Teil liegt, der seinerseits mit der besagten Rücklehne (122) der besagten Sitzfläche (121) verbunden ist.

3. Hängematte nach Anspruch 1, **dadurch gekennzeichnet, dass** sie Mittel zum Steuern des Faltens der besagten Platten (23_{D}, 23_{G}, 24_{D}, 24_{G}) aufweist, die für mindestens einer der besagten Gelenke (31_{D}, 31_{G}, 32_{D}, 32_{G}) nur eine Drehrichtung beim Falten zulassen.

4. Hängematte nach Anspruch 3, **dadurch gekennzeichnet, dass** sie mindestens einen Gelenkanschlag aufweist, der die Bewegungen von mindestens einem der Gelenke (31_{D}, 31_{G}, 32_{D}, 32_{G}) begrenzt.

5. Hängematte nach Anspruch 1, **dadurch gekennzeichnet, dass** sie über Hilfsmittel zum Einleiten des Faltens der besagten Verstärkungsplatten (23_{D}, 23_{G}, 24_{D}, 24_{G}) verfügt.

6. Hängematte nach Anspruch 5, **dadurch gekennzeichnet, dass** sie mindestens ein elastisches Element aufweist, das unter den besagten Verstärkungsplatten (23_{D}, 23_{G}, 24_{D}, 24_{G}) angebracht ist, so dass dieses Element gespannt ist, wenn die besagte Hängematte sich in entfalteter Position befindet, wobei die besagten Verstärkungsplatten (23_{D}, 23_{G}, 24_{D}, 24_{G}) sich in der Ebene der Sitzfläche (121) bzw. der Rücklehne (122) befinden.

7. Hängematte nach Anspruch 6, **dadurch gekennzeichnet, dass** mindestens eine der besagten Verstärkungsplatten (23_{D}, 23_{G}, 24_{D}, 24_{G}) eine schiefe Ebene trägt, die beim Falten mit einem der besagten Kreuzstreben zusammenwirkt.

8. Nach drei Dimensionen faltbarer Kinderwagen, der über mindestens eine Hängematte (12) nach einem der Ansprüche 1 bis 7 verfügt.

## Claims

1. A hammock for a three-dimensional folding pushchair, comprising a backrest (122) and a seat (121) mounted on a folding structure, **characterised in that** the said seat (121) comprises two reinforcing plates (23_{D}, 23_{G}) hinged together on the one hand, and respectively hinged to a lateral element (21_{D}, 21_{G}) of the said folding structure on the other hand, using corresponding hinges (31_{D}, 31_{G}, 32_{D}, 32_{G}), the said folding structure comprising crosspieces connecting the said lateral elements (21_{D}, 21_{G}), mounted in a way that the said lateral elements (21_{D}, 21_{G}) draw closer to each other when folding, the said crosspieces extending under the said seat (121), the said crosspieces defining two callipers, each one having two arms connected by a pivot (413, 423) that extend into a central position of the seat at the level of the hinge between the two reinforcing plates according to a vertical plane, and mounted in a way that the first arm (411) of the first calliper is positioned above the first arm (421) of the second calliper, and that the second arm (412) of the first calliper is positioned below the second arm (422) of the second calliper.

2. A hammock according to Claim 1, **characterised in that** the said first calliper presents two calliper arms (411, 412) connected by an axle (413) extending to the vicinity of a front section opposite the rear section connected to the backrest (122) of the said seat (121).

3. A hammock according to Claim 1, **characterised in that** it comprises means for controlling the folding of the said plates (23_{D}, 23_{G}, 24_{D}, 24_{G}), only permitting one single direction of rotation for at least one of the said hinges (31_{D}, 31_{G}, 32_{D}, 32_{G}) when folding.

4. A hammock according to Claim 3, **characterised in that** it comprises at least one hinge stop, limiting the movements of at least one of the said hinges (31_{D}, 31_{G}, 32_{D}, 32_{G}).

5. A hammock according to Claim 1, **characterised in that** it comprises means to assist with starting the folding of the said reinforcing plates (23_{D}, 23_{G}, 24_{D}, 24_{G}).

6. A hammock according to Claim 5, **characterised in that** it comprises at least one elastic element mounted under the said reinforcing plates (23_{D}, 23_{G}, 24_{D}, 24_{G}), in a way that it is tight when the said hammock is in an unfolded position, the said reinforcing plates (23_{D}, 23_{G}, 24_{D}, 24_{G}) extending into the plane of the seat (121), respectively of the backrest (122).

7. A hammock according to Claim 6, **characterised in that** at least one of the said reinforcing plates (23_{D}, 23_{G}, 24_{D}, 24_{G}) carry a tilted plane, cooperating with one of the said crosspieces when folding.

8. A three-dimensional folding pushchair comprising a least one hammock (12) according to any one of Claims 1 to 7.
